Europäisches Patentamt

European Patent Office

Office européen des brevets

(19)

(11) **EP 0 839 843 B1**

(12) **EUROPEAN PATENT SPECIFICATION**

(45) Date of publication and mention
of the grant of the patent:
**17.10.2001 Bulletin 2001/42**

(51) Int Cl.[7]: **C08F 220/12**, C08F 218/18,
C08L 33/06, C08L 31/08,
C09D 133/06, C09D 131/08

(21) Application number: **96923085.3**

(22) Date of filing: **15.07.1996**

(86) International application number:
**PCT/JP96/01963**

(87) International publication number:
**WO 97/04016 (06.02.1997 Gazette 1997/07)**

(54) **AQUEOUS EMULSION CONTAINING FINE PARTICLES OF CROSS-LINKED ALLYLIC COPOLYMER**

WÄSSRIGE EMULSION ENTHALTEND FEINE TEILCHEN VON VERNETZTEM ALLYL-COPOLYMER

EMULSION AQUEUSE CONTENANT DE FINES PARTICULES DE COPOLYMERES ALLYLIQUES RETICULES

(84) Designated Contracting States:
**AT DE ES FI FR GB IT SE**

(30) Priority: **17.07.1995 JP 18021695**

(43) Date of publication of application:
**06.05.1998 Bulletin 1998/19**

(73) Proprietor: **DAISO CO., LTD.**
**Osaka-shi, Osaka 550-0002 (JP)**

(72) Inventors:
 • **NAKAMURA, Seiji**
 **Hyogo 661 (JP)**
 • **OHTSUKA, Takayuki**
 **Hyogo 660 (JP)**

 • **AOKI, Koji**
 **Hyogo 664 (JP)**
 • **YAMAJI, Katsuhiro**
 **Osaka 569-11 (JP)**
 • **SHIMIZU, Yasumi**
 **Hyogo 666 (JP)**

(74) Representative: **VOSSIUS & PARTNER**
**Postfach 86 07 67**
**81634 München (DE)**

(56) References cited:
 JP-A- 4 063 816    JP-A- 6 220 288
 JP-A- 49 018 924   JP-A- 50 021 083
 JP-A- 51 089 549   JP-A- 56 016 544

## Description

The present invention relates to a crosslinked allyl copolymer fine particle-containing aqueous emulsion which is useful as a paint, a coating agent and an adhesive and is also useful as a filler or a resin modifier to be formulated in a resin, said aqueous emulsion itself having excellent film forming property, said particles having a crosslinked structure inside the particle.

A diallyl phthalate resin decorative sheet has hitherto been obtained by putting a decorative paper impregnated with a diallyl phthalate prepolymer on the surface of a substrate such as plywood, particle board, medium duty fiberboard (MDF) and slate, and hot-press curing to integrate them, and the decorative sheet has been used as a high-grade decorative sheet in a lot of fields. In that case, the used impregnated paper has been prepared by dissolving a resin composition comprising a diallyl phthalate prepolymer as a main component in an organic solvent such as acetone, methyl ethyl ketone and toluene to make an impregnating liquid, impregnating a decorative paper with the impregnating liquid and drying the impregnated decorative paper.

However, in view of the environmental pollution or disruption, safety/ sanitation, etc., a switch to a method using no organic solvent has recently been strongly desired. Besides, the above conventional method has the following drawbacks. That is, since the prepolymer is used as the main component of the resin composition, not only a large amount of a catalyst such as peroxide is required to solidify the resin in the hot-press curing as the post step but also a comparatively long time is required to complete the polymerization, resulting in inferior productivity.

As the system using no organic solvent, patents relating to the emulsion polymerization of an allyl monomer and vinyl monomers have already been disclosed, but have various problems on the film forming property and the like.

In Japanese Patent Kokoku Publication No. 35914/1970, there is a description about the emulsion polymerization wherein an unsaturated acid is added as an essential component for smoothly conducting the polymerization reaction between a diallyl ester of a dibasic acid and an addition-polymerizable monomer. The amount of the unsaturated acid in this publication is large, i.e. 5 to 20% by weight based on the total monomer. Besides, there is also described the Example wherein, since the copolymerizability between the unsaturated acid and the diallyl ester of dibasic acid is not satisfactory when the amount of the unsaturated acid is not more than 5% by weight, styrene as the essential addition-polymerizable monomer is emulsion-polymerized with the diallyl ester of dibasic acid in the presence of a large amount of the unsaturated acid. However, the formulation of a large amount of the unsaturated acid makes the water resistance of the resulting polymer inferior and, therefore, it is not unfavorable.

In Japanese Patent Kokoku Publication No. 49032/1977, the film forming property is obtained by emulsion-copolymerizing a mixed monomer comprising 30 to 90% by mol (36 to 96% by weight) of diallyl phthalate, 10 to 70% by mol (3 to 64% by weight) of an acrylate ester and 0 to 60% by mol (0 to 56% by weight) of a vinyl monomer and stopping the emulsion polymerization at the polymerization degree of 40 to 90% to intentionally leave the unreacted monomer, resulting in development of the plasticizing effect. Incidentally, there arises such a problem on the processing operation. That is, when the polymerization is stopped within this range, a radical initiator should be post-added on molding. Since the resulting coated film causes considerable shrinkage, a hot-press molding is required.

In Japanese Patent Kokoku Publication No. 18475/1976, the blocking resistance is imparted by emulsion-polymerizing 50 to 90% by weight of diallyl phthalate and 10 to 50% by weight of an acrylate ester in the presence of an amphoteric surfactant and blending the resulting emulsion with other polymer emulsion. The polymerization degree of this publication is from 50 to 90%, and this emulsion composition alone has no film forming property.

Japanese Patent Kokoku Publication No. 26294/1982 discloses an emulsion prepared by polymerizing diallyl phthalate alone or with other vinyl monomer at the polymerization degree of not less than 50%, but has a disadvantage that a large amount of an acrylate ester emulsion and a water-soluble polymer must be added to have a film forming property. In the Examples, there are described only those wherein the polymerization degree is not more than 70%.

In addition, in Japanese Patent Kokoku Publication No. 6753/1977 (corresponding to U.S. Patent 3963661 and 4017434), Japanese Patent Kokoku Publication No. 50072/1977 (corresponding to U.S. Patent 3975349), Japanese Patent Kokoku Publication No. 31259/1976 and Japanese Patent Kokoku Publication No. 28294/1978, there is a description of the diallyl phthalate/acrylate emulsion composition. In all publications, the polymerization of diallyl phthalate is stopped to leave the unreacted monomer, which serves as a binder between particles to impart the film forming property. Therefore, it is necessary to react the unreacted monomer again on formation of the coated film, and the curing reaction is conducted by adding a catalyst.

The present invention provides a crosslinked copolymer fine particle-containing aqueous emulsion which has good film formation property even when diallyl phthalate is substantially completely polymerized by conducting the emulsion polymerization using a specific monomer composition, that is, even when the unreacted monomer does not remain. The present invention also provides a crosslinked copolymer fine particle-containing aqueous emulsion which is not only useful as a paint, a coating material and an adhesive but also useful as a filler for resin, by reducing the amount of the α, β-unsaturated carboxylic acid as much as possible so as to improve the water resistance of the coated film, which contributes to the crosslinking reaction between fine particles, and emulsion-copolymerizing a specific acrylate ester with diallyl phthalate so as to impart a good film formation property.

The present invention provides a crosslinked allyl copolymer fine particle-containing aqueous emulsion having an average particle size of at most 200 nm, which is obtained by emulsion-copolymerizing a monomer comprising (a) 10 to 40% by weight of diallyl phthalate, (b) 0.1 to 5% by weight of an $\alpha, \beta$-unsaturated carboxylic acid and (c) a balance of an acrylate ester wherein the number of carbon atoms of an alcohol is from 1 to 8 until the polymerization degree of diallyl phthalate (a) becomes at least 85%.

The present invention also provides an emulsion composition which is obtained by adding a crosslinking agent capable of reacting with a carboxyl group to the above emulsion.

The present invention also provides a crosslinked allyl copolymer particle which is obtained by drying the above emulsion.

Diallyl phthalate (a) used in the present invention is a general term of ortho-, iso- and tere-compounds, and may be used alone or in combination thereof.

The number of carbon atoms of the $\alpha,\beta$-unsaturated carboxylic acid (b) is preferably from 3 to 8. As the $\alpha,\beta$-unsaturated carboxylic acid, for example, acrylic acid, methacrylic acid, crotonic acid, maleic acid, itaconic acid, etc. are particularly preferable. They may be used alone or in combination thereof.

As the acrylate ester (c), esters wherein the number of carbon atoms of the alcohol is from 1 to 8, such as methyl acrylate, ethyl acrylate, propyl acrylate, isopropyl acrylate, butyl acrylate, isobutyl acrylate, 2-ethylhexyl acrylate and octyl acrylate are preferable. They may be used alone or in combination thereof. Even when using the methacrylate in place of the acrylate as the acid component of the ester, a fine particle-containing aqueous emulsion having a good film forming property can not be obtained.

As far as the film forming property is not deteriorated, a part of the acrylate ester (c) may be substituted with other esters or amides, for example, esters of $\alpha, \beta$-unsaturated carboxylic acid, such as methacrylate ester, maleate ester, fumarate ester, itaconate ester and acetoacetoxyethyl methacrylate; $\alpha, \beta$-unsaturated nitriles such as acrylonitrile and methacrylonitrile; amides of $\alpha,\beta$-unsaturated carboxylic acid, such as acrylamide, methacrylamide, acrylisopropylamide, methacrylisopropylamide, N-methylolacrylamide and diacetoneacrylamide; epoxy group-containing vinyl compounds such as glycidyl methacrylate and glycidyl acrylate; vinyl esters such as vinyl acetate, vinyl propionate, vinyl ester of versatic acid (Veova 10, trade name from Shell Japan Co. and Veova 9, trade name from Shell Japan Co.); aromatic conjugated vinyl compounds such as styrene and $\alpha$-methylstyrene; $\alpha, \beta$-unsaturated ketones such as acrolein and crotonaldehyde; hydroxyl group-containing, vinyl compounds such as 2-hydroxyethyl acrylate, 2-hydroxypropyl acrylate and 2-hydroxyethyl methacrylate; and acrylate esters or methacrylate esters having a fluorinated alcohol component, such as trifluoroethyl acrylate and trifluoroethyl methacrylate. The amount therof is not more than 40% by weight based on the component (c).

In the above monomer composition, when the amount of diallyl phthalate (a) is smaller than 10% by weight, the surface of the resulting coated film has tackiness and is also inferior in solvent resistance and, therefore, it is not suitable for practical use. When the amount of diallyl phthalate is larger than 40% by weight, that is, when the amount of the acrylate ester (c) is decreased, the film forming property is deteriorated. The amount of diallyl phthalate (a) may be particularly from 12 to 38% by weight, e.g. 15 to 35% by weight.

When the amount of the $\alpha, \beta$-unsaturated carboxylic acid (b) is smaller than 0.1% by weight, the solvent resistance becomes insufficient. When the amount thereof is larger than 5% by weight, the water resistance is deteriorated and the effect for improvement of the solvent resistance becomes dull. Therefore, it is unfavorable in view of balance among physical properties. The amount of the $\alpha, \beta$-unsaturated carboxylic acid (b) may be particularly from 0.3 to 4% by weight, e.g. 0.5 to 4% by weight.

The crosslinked allyl copolymer fine particle-containing aqueous emulsion of the present invention can be produced by adding an emulsifier and a polymerization initiator, when the total amount (concentration) of the above monomers (a), (b) and (c) in water is from 5 to 60% by weight, and emulsion-polymerizing the mixture at the polymerization temperature of 40 to 100°C, preferably from 50 to 90°C until the polymerization degree of diallyl phthalate becomes at least 85%. In case of the reaction, the monomers may be first added in one portion but may be added gradually as the reaction proceeds. In case of the addition, there may be used an emulsion prepared by emulsifying the monomers with the emulsifier. The reaction is normally conducted under stirring, but a disper, a homogenizer, etc. may also be used in addition to a normal stirring method. The reaction can also be conducted with stirring or non-stirring under the condition of ultrasonic wave irradiation.

The polymerization degree of diallyl phthalate is preferably at least 90%, more preferably at least 92%, particularly at least 94%. The gel fraction of the copolymer may be at least 88%, particularly at least 90%.

The average particle size of the crosslinked allyl copolymer fine particles contained in the emulsion of the present invention is preferably at most 200 nm in view of use thereof. When the average particle size is larger than 200 nm, the gloss and luster are insufficient. The average particle size may be particularly at most 150 nm, e.g. at most 100 nm.

The emulsion containing fine particles having the average particle size of at most 200 nm can be obtained by emulsion-polymerizing using the emulsifier in the amount of 0.1 to 10% by weight, preferably from 0.5 to 7% by weight, based on the whole monomers. The emulsifier may be added in one portion, first, but may be added in several portions as the reaction proceeds. When the amount of the emulsifier is smaller than 0.1% by weight, agglomerates are liable to arise during the polymerization. Even when the amount is larger than 10% by weight, no improvement in reaction stability is recognized and, on the contrary, the water resistance of the resin is deteriorated.

The emulsifier used in the present invention includes cationic, anionic, nonionic, amphoteric, anion-nonion mixed and composite surfactants. Normally, the anionic, anion-nonion mixed or composite surfactant gives good results.

Examples of the cationic surfactant include a primary amine hydrochloride, a secondary amine hydrochloride, a tertiary amine hydrochloride, a quaternary ammonium salt and the like.

Examples of the anionic surfactant include a fatty acid salt, a sulfate ester salt of higher alcohol, a sulfate ester of liquid fatty oil, a sulfate salt of aliphatic amine and aliphatic amide, a phosphate ester of aliphatic alcohol, a sulfonate salt of dibasic fatty acid ester, a sulfonate, an alkyl aryl sulfonate and a formalin-condensated naphthalenesulfonate of aliphatic amide and the like.

Examples of the nonionic surfactant include a polyoxyethylene alkyl ether, a polyoxyethylene polyoxypropylene alkyl ether, a polyoxyethylene aryl ether, a polyoxyethylene polyoxypropylene aryl ether, a polyoxyethylene alkyl aryl ether, a polyoxyethylene polyoxypropylene alkyl aryl ether, a polyoxyethylene alkyl ester, a polyoxyethylene polyoxypropylene alkyl ester, a sorbitan alkyl ester, a polyoxyethylene sorbitan alkyl ester and the like.

Examples of the amphoteric surfactant include an amino acid type, a betaine type, a sulfate ester salt type, a sulfonic acid salt type and a phosphate ester salt type surfactants.

As the anion-nonion mixed surfactant, there can be those prepared by appropriately selecting/mixing the above anionic and nonionic surfactants. Examples of the anion-nonion composite surfactant include an ammonium salt, sodium salt and potassium salt of sulfate ester or phosphate ester of nonionic surfactants such as polyoxyethylene alkyl aryl ethers, polyoxyethylene alkyl ethers, polyoxyethylene polyoxypropylene alkyl ethers, polyoxyethylene aryl ethers, polyoxyethylene polyoxypropylene aryl ethers, polyoxyethylene polyoxypropylene alkyl aryl ethers and the like.

Use of a reactive emulsifier having a polymerizable double bond in one molecule as the emulsifier also does not prevent the present invention. Specific examples thereof include Eleminol JS-2 and RS-30 (trade name of Sanyo Chemical Industries, Ltd.); Acuaron RN-20, RN-30, RN-50, HS-10, HS-20, HS-1025 and New Frontiers (trade name of Dai-ichi Kogyo Seiyaku Co., Ltd); and Antox MS-60, RMA-1120 and RMA-500 series (trade name of Nippon Nyukazai Co., Ltd.)

The reactive emulsifiers may be used alone or in combination thereof, or used in combination with the emulsifier other than the reactive emulsifier.

As the polymerization initiator used in the present invention, a water-soluble radical generator is preferable and examples thereof include ammonium persulfate, potassium persulfate, sodium persulfate, hydrogen peroxide, a water-soluble azo and redox polymerization initiator and the like.

Examples of the water-soluble azo polymerization initiator include hydrochloride salts of azo compounds having an amino group and an imino group, such as 2,2-azobis(2-methyl-N-phenylpropionamidine)dihydrochloride, 2,2-azobis(N-(4-chlorophenyl)-2-methylpropionamidine)dihydrochloride, 2,2-azobis(2-methyl-N-(phenylmethyl)propionamidine)dihydrochloride and 2,2-azobis(2-methyl-N-(2-propenyl)propionamidine)dihydrochloride; and hydrochloride salts of azo compounds having a cyclic amino group and an imino group, such as 2,2-azobis(2-(5-methyl-2-imidazolin-2-yl)propane)-dihydrochloride, 2,2-azobis(2-(2-imidazolin-2-yl)propane)dihydrochloride, 2,2-azobis(2-(4,5,6,7-tetrahydro-1H-1,3-diazepin-2-yl)propane)dihydrochloride and 2,2-azobis(2-(5-hydroxy-3,4,5,6-tetrahydropyrimidin-2-yl)propane)-dihydrochloride.

Examples of the redox polymerization initiator include combination of potassium persulfate or ammonium persulfate with sodium hydrogensulfite, sodium metabisulfite, acidic sodium sulfite or Rongalite (sodium formaldehyde sulfoxylate dihydrate), combination of an organic peroxide such as t-butyl hydroperoxide and cumene hydroperoxide with an acidic sodium sulfite or Rongalite. If necessary, a lipophilic peroxide such as benzoyl peroxide and teriary butyl hydroperoxide, or a lipophilic azo compound such as 2,2'-azobisisobutyronitrile and 1,1'-azobis(cyclohexane-1-carbonitrile) can also be used as the initiator.

The amount of the used polymerization initiator is from 0.05 to 5% by weight, and may be added in one portion or added gradually.

In case of the production of the emulsion of the present invention, a part or all of carboxyl groups in the copolymer obtained by the copolymerization and acid groups formed as by-products by the decomposition of the polymerization initiator are preferably neutralized with a neutralizer.

Examples of the neutralizer include inorganic alkalines such as potassium hydroxide and sodium hydroxide; and amines such as ammonia, monomethylamine, dimethylamine, trimethylamine, monoethylamine, diethylamine, triethylamine, mono-n-propylamine, dimethyl-n-propylamine, monoethanolamine, diethanolamine, triethanolamine, N-methylethanolamine, N-aminoethylethanolamine, N-methyldiethanolamine, monoisopropanolamine, diisopropanolamine, triisopropanolamine and N,N-dimethylpropanolamine, and one or more neutralizers selected from them can be used.

By adding the crosslinking agent to the above resulting emulsion to conduct the crosslinking, the solvent resistance can be improved. The crosslinking is conducted while the carboxyl group of the $\alpha,\beta$-unsaturated carboxylic acid introduced in the copolymer serves as a crosslinking site.

The above crosslinking agent has a reactivity with the carboxyl group, and examples thereof include an amino resin, an epoxy compound and the like.

The amino resin is a thermosetting resin obtained by addition-reacting formaldehyde or paraformaldehyde to melamine, benzoguanamine, urea, etc., or is prepared by alkyl-etherifying a part or all of methylol groups of the thermosetting resin. Specific examples thereof include melamine-formaldehyde resins such as methylol melamine, methylated methylol melamine and butylated methylol melamine; guanamine-formaldehyde resins such as methylol benzoguanamine and butylated methylol benzoguanamine; and urea-formaldehyde resins such as methylol urea, methylated methylol urea and butylated methylol urea.

Examples of the epoxy compound include bisphenol A epichlorohydrin type or novolak epichlorohydrin type epoxy resin, glycerine polyglycidyl ether, neopentyl diglycidyl ether, pentaerythritol polyglycidyl ether, diglycerol polyglycidyl ether, polyglycerol polyglycidyl ether, dipentaerythritol polyglycidyl ether, triglycidyltri-(2-hydroxyethyl)isocyanurate, sorbitol polyglycidyl ether, sorbitan polyglycidyl ether, trimethylol propane polyglycidyl ether, resorcine glycidyl ether, 1,6-hexanediol diglycidyl ether, ethylene glycol diglycidyl ether, polyethylene glycol diglycidyl ether, propylene glycol diglycidyl ether, polypropylene glycol diglycidyl ether, polyethylene-propylene glycol diglycidyl ether, polytetramethylene glycol diglycidyl ether, epoxylated polyolefin, epoxylated soybean oil, vinylcyclohexene dioxides, adipic acid diglycidyl ester, phthalic acid diglycidyl ester and the like.

A curing accelerator may also be used on crosslinking. Examples of the curing accelerator include paratoluenesulfonic acid, dodecylbenzenesulfonic acid, phosphoric acid, a partial alkyl ester of phosphoric acid, oxalic acid, citric acid or a neutralized compound of these acids with ammonia, a primary amine, a secondary amine or a tertiary amine, and inorganic salts such as ammonium chlorid and ammonium nitrate. The amount of the used curing accelerator is suitably from 0.1 to 10% by weight based on the solid content of the emulsion.

Regarding the emulsion composition prepared by formulating the crosslinking agent in the emulsion of the present invention, the desired physical properties are obtained by heat-treating at 70 to 350'C, preferably from 80 to 250'C. The crosslinking agent may be added as it is, or added after it is previously converted into an emulsion using an emulsifier. The amount of the crosslinking agent is from 1 to 40 parts by weight, preferably from 2 to 30 parts by weight, based on 100 parts by weight of the solid content of the emulsion as the base. When the amount is smaller than 1 part by weight, the effect of the solvent resistance is insufficient. When the amount is larger than 40 parts by weight, the resulting coated film itself becomes brittle and the flexibility becomes poor.

To the above emulsion composition, if necessary, there can be used pigments which are normally used in a paint, for example, inorganic pigments such as titanium dioxide, calcium carbonate, barium carbonate, kaolin, white lead, chrome yellow, red lead, strontium chromate, zinc chromate, titanium yellow, cadmium yellow, iron blue, ultramarine, talc, mica, barium sulfate, silica, titanium black, iron black, molybdenum red, molybdenum white and red oxide; and organic pigments such as carbon black, an insoluble azo dye, a soluble azo dye and a phthalocyanine dye. It is possible to add additives which are used as a normal paint component, for example, film-forming agents, inorganic modifiers (e.g. colloidal silica and tetraethoxysilane), plasticizers, solvents, dispersants, tackifiers, gloss improvers, matting agents, antifoamers, preservatives, anti-fungus agents, mildewproofing agents, ultraviolet absorbers, antioxidants and foaming agents as the other additive. It is also possible to blend with a commercially available aqueous emulsion, paint and the like.

The crosslinked allyl copolymer fine particle-containing aqueous emulsion obtained by the emulsion polymerization can be used as a solid particle after drying. The drying method may be a method which is normally used in the technical field. For example, there can be used the salting-out dying, the freeze-drying, the spray-drying, etc., but the spray-drying is economically preferable. The average particle size of the resulting solid particle varies depending on the drying method, but those having the average particle diameter of 10 to 100 $\mu$m are obtained in the present invention. The solid particle may be shaped into a pellet. In case of formulating this solid particle in the thermoplastic resin or thermosetting resin, this solid particle can be used as resin modifiers such as a shrinkage controller, a crosslinking agent, an organic filler, a tackifier, a thixotropic agent, a gloss agent, a matting agent, etc. In case of formulating in paint, the solid particle can be used as a matting agent, a dispersant, a tackifier, a thixotropic agent, a gloss agent, etc.

The emulsion or emulsion composition of the present invention gives a film of a copolymer on a substrate by coating on the substrate, followed by drying. Examples of the substrate include metal, wood material, glass, cloth (e.g. nonwoven fabric), paper, gypsum, slate, concrete, asphalt, plastic, natural product and the like. The coating can be conducted by brushing, dip-coating, spray-coating, bar-coating, roll-coating, roll-brushing, flow-coating, curtain-coating and the like. The drying temperature is preferably from -10 to 130°C, more preferably from -10 to 90°C. The drying time may be from 0.5 minute to 48 hours, preferably from 0.5 minute to 24 hours. When the crosslinking agent is formulated, the heat treatment is preferably conducted so as to conduct the crosslinking reaction after drying under the above drying condition. The crosslinking temperature is from 70 to 250'C, more preferably from 90 to 240'C, more preferably from 100 to 240'C. The crosslinking time may be from 0.5 minute to 3 hours, preferably from 1 minute to 1 hour. The drying and the crosslinking can also be simultaneously conducted by adjusting the heating condition of the crosslinking. No crack is recognized in the film obtained by drying or the crosslinked film obtained by further crosslinking. The thickness of the film is from 0.3 to 500 μ, preferably from 0.3 to 200 μ, more preferably from 0.5 to 100 μ.

The present invention will be illustrated by the following Examples. In the Examples, "%" are "by weight" unless otherwise stated.

Example 1

The following materials were charged in a 2 L separable flask equipped with a stirrer, a thermometer, a condenser, a gas introducing inlet and a sampling inlet to prepare an aqueous emulsifier solution.

| | |
|---|---|
| Sodium dodecylbenzenesulfonate (Neogen R, manufactured by Dai-ichi Kogyo Seiyaku Co., Ltd.) | 9.6 g |
| Water | 1100 g |

Separately, a monomer mixture having the following composition was prepared.

| | |
|---|---|
| Diallyl orthophthalate (DAP) | 120 g (25% monomer) |
| Ethyl acrylate (EA) | 348 g (72.5% monomer) |
| Acrylic acid (AA) | 12 g (2.5% monomer) |

The internal temperature of the separable flask was heated to 80°C and the atmosphere in the flask was sufficiently displaced with nitrogen under stirring at 300 rpm by a semicircular stirring blade. Then, 10% of the prepared monomer mixture was charged and an aqueous solution prepared by dissolving ammonium persulfate (2.4 g) in water (20 g) was added. The reaction was conducted for 1 hour, and then the residual (90%) monomer was gradually added over about 3 hours (monomer addition method). Furthermore, the polymerization was conducted at 80'C for 5 hours. The resulting emulsion had a solid content of 30%, a polymerization degree (DAP) of 95%, a polymerization degree (EA) of 100%, an average particle size of 139 nm and a gel fraction of 98%.

The polymerization degree was determined by measuring the amount of the residual DAP and EA by means of gas chromatography, and calculating according to the following equation.

$$\text{Polymerization degree (\%)} = (\text{weight of charged monomer - weight of unreacted monomer}) \times 100/\text{weight of charged monomer}$$

The average particle size was measured by using a laser particle size analyzing system PHOTON CORRELATOR LPA-3000 (manufactured by Ohtsuka Denshi Co., Ltd.)

The measurement of the gel fraction was conducted as follows.

A block-like solid (about 5 g) obtained by drying the emulsion in an oven at 80°C was taken as a sample, which was subjected to Soxhlet extraction using acetone as a solvent for 18 hours. A mixture of the resulting filtration residue, and a small amount of a precipitate obtained by subjecting the extracted solution to ultracentrifugation was regarded as a gel content and the gel fraction (%) was calculated according to the following equation.

$$\text{Gel fraction (\%)} = \text{weight of gel content} \times 100/(\text{weight of dried sample} \times \text{correction value})$$

In the above equation, the correction value is [1 - (% by weight of unreacted DAP)] and the weight of the unreacted DAP was determined by gas chromatography.

Example 2

The following materials were charged in a 1 L separable flask equipped with a stirrer, a thermometer, a condenser, a gas introducing inlet and a sampling inlet to prepare an aqueous emulsifier solution.

| Sodium dodecylbenzenesulfonate | 4.8 g |
|---|---|
| Water | 550 g |

240 g of the above aqueous emulsifier solution was taken into a separate flask and a monomer mixture having the following composition was mixed with the solution to prepare an emulsified monomer.

| DAP | 72 g (30% monomer) |
|---|---|
| EA | 158.4 g (66% monomer) |
| AA | 9.6 g (4% monomer) |

The internal temperature of the separable flask was heated to 80°C and the atmosphere in the flask was sufficiently displaced with nitrogen under stirring at 300 rpm using a semicircular stirring blade. Then, 10% of the prepared emulsified monomer was charged and an aqueous solution prepared by dissolving ammonium persulfate (1.2 g) in water (10 g) was added. The reaction was conducted for 1 hour, and then the residual emulsified monomer was gradually added over 4 hours (emulsion addition method). Furthermore, the polymerization was conducted at 80°C for 4 hours. The resulting emulsion had a solid content of 30%, a polymerization degree (DAP) of 95.8%, a polymerization degree (EA) of 100%, an average particle size of 97 nm and a gel fraction of 97%.

Example 3

Using the same device as that of Example 2, the following aqueous emulsifier solution was prepared.

| Sodium dodecylbenzenesulfonate | 9.6 g |
|---|---|
| Water | 470 g |

320 g of the above aqueous emulsifier solution was taken in a separate flask and a monomer mixture having the following composition was mixed with the solution to prepare an emulsified monomer.

| DAP | 80 g (25% monomer) |
|---|---|
| EA | 236.8 g (74% monomer) |
| AA | 3.2 g (1% monomer) |

The internal temperature of the separable flask was heated to 50°C and the atmosphere in the flask was sufficiently displaced with nitrogen. Then, 10% of the prepared emulsified monomer was charged and aqueous solutions prepared by respectively dissolving ammonium persulfate (1.4 g) and sodium hydrogensulfite (0.58 g) in water (10 g) were added. The reaction was conducted for 1 hour, and then the residual emulsified monomer was gradually added over 3.5 hours. Furthermore, the polymerization was conducted at 60°C for 4.5 hours. The resulting emulsion had a solid content of 40%, a polymerization degree (DAP) of 92.0%, a polymerization degree (EA) of 100%, an average particle size of 139 nm and a gel fraction of 96%.

Example 4

According to the same manner as in Example 1 except for using the same device and aqueous emulsifier solution as those of Example 2 and using a monomer mixture having the following composition, the emulsion polymerization was conducted.

| DAP | 24 g (10% monomer) |
|---|---|
| EA | 210 g (87.5% monomer) |
| AA | 6 g (2.5% monomer) |

The resulting emulsion had a solid content of 30%, a polymerization degree (DAP) of 91.2%, a polymerization degree (EA) of 100%, an average particle size of 95 nm and a gel fraction of 92%.

Example 5

Using the same device as that of Example 2, the following aqueous emulsifier solution was prepared.

| | |
|---|---|
| Sodium dodecylbenzenesulfonate | 7.2 g |
| Water | 550 g |

According to the same manner as in Example 2 except that 120 g of the above aqueous emulsifier solution was taken into a separate flask and a monomer having the following composition was mixed with the solution to prepare an emulsified monomer, the emulsion polymerization was conducted.

| | |
|---|---|
| DAP | 84 g (35% monomer) |
| EA | 150 g (62.5% monomer) |
| AA | 6 g (2.5% monomer) |

The resulting emulsion had a solid content of 30%, a polymerization degree (DAP) of 94.1%, a polymerization degree (EA) of 99.8%, an average particle size of 119 nm and a gel fraction of 95%.

Example 6

According to the same manner as in Example 1 except that an aqueous emulsifier solution having the following composition was prepared using the same device as that of Example 2 and a monomer having the following composition was mixed with the solution and, furthermore, an aqueous solution prepared by dissolving ammonium persulfate (1.2 g) in water (10 g) was used, the emulsion polymerization was conducted.

| Aqueous emulsifier solution | |
|---|---|
| Sodium dodecylbenzenesulfonate | 4.8 g |
| Water | 550 g |
| Monomer | |
| DAP | 60 g (25% monomer) |
| Butyl acrylate (BA) | 174 g (72.5% monomer) |
| AA | 6 g (2.5% monomer) |

The resulting emulsion had a solid content of 30%, a polymerization degree (DAP) of 94.1%, a polymerization degree (BA) of 100%, an average particle size of 96 nm and a gel fraction of 94%.

Example 7

According to the same manner as that described in Example 1 except that an aqueous emulsifier solution having the following composition was prepared using the same device as that of Example 2 and a monomer mixture having the following composition was used, the emulsion polymerization was conducted.

| Aqueous emulsifier solution | |
|---|---|
| Sodium dodecylbenzenesulfonate | 4.8 g |
| Water | 550 g |
| Monomer | |
| DAP | 60 g (25% monomer) |
| 2-Ethylhexyl acrylate (2-EtHA) | 174 g (72.5% monomer) |
| AA | 6 g (2.5% monomer) |

The resulting emulsion had a solid content of 30%, a polymerization degree (DAP) of 92.5%, a polymerization degree (2-EtHA) of 100%, an average particle size of 75 nm and a gel fraction of 97%.

Example 8

According to the same manner as in Example 2 except that an aqueous emulsifier solution having the following composition was prepared using the same device as that of Example 2 and a monomer having the following composition and an aqueous solution prepared by dissolving ammonium persulfate (0.84 g) in water (8 g) was used and, furthermore, the reaction temperature was adjusted to 70°C, the emulsion polymerization was conducted.

| Aqueous emulsifier solution | |
|---|---|
| Sodium dodecylbenzenesulfonate | 7.2 g |
| Water | 550 g |
| Monomer | |
| Diallyl terephthalate (DATP) | 60 g (25% monomer) |
| EA | 174 g (72.5% monomer) |
| AA | 6 g (2.5% monomer) |

The resulting emulsion had a solid content of 30%, a polymerization degree (DATP) of 93.6%, a polymerization degree (EA) of 100%, an average particle size of 80 nm and a gel fraction of 93%.

Comparative Example 1

Using the same device and aqueous emulsifier solution as those of Example 2, a monomer mixture having the following composition was emulsion-polymerized at 80°C for 12 hours by the monomer addition method (provided that the amount of a polymerization initiator was 1.2 g).

| EA | 222 g (92.5% monomer) |
|---|---|
| DAP | 12 g (5% monomer) |
| AA | 6 g (2.5% monomer) |

The resulting emulsion had a solid content of 30%, a polymerization degree (DAP) of 98.5%, a polymerization degree (EA) of 99.7%, an average particle size of 84 nm and a gel fraction of 76%.

Comparative Example 2

According to the same manner as in Example 2 except for using the same device as that of Example 2 and using an aqueous emulsifier solution and a monomer mixture, each having the following composition, the emulsion polymerization was conducted.

| Aqueous emulsifier solution | |
|---|---|
| Sodium dodecylbenzenesulfonate | 9.6 g |
| Water | 550 g |
| Monomer | |
| EA | 120 g (47.5% monomer) |
| DAP | 114 g (50% monomer) |
| AA | 6 g (2.5% monomer) |

The resulting emulsion had a solid content of 30%, a polymerization degree (DAP) of 91.0%, a polymerization degree (EA) of 99.5%, an average particle size of 183 nm and a gel fraction of 95%.

Comparative Example 3

According to the same manner as in Example 2 except for using the same device as that of Example 2 and using an aqueous emulsifier solution and a monomer mixture, each having the following composition, the emulsion polymerization was conducted.

| Aqueous emulsifier solution | |
|---|---|
| Sodium dodecylbenzenesulfonate Water | 4.8 g 550 g |
| Monomer | |
| EA DAP AA | 149 g (62.1 % monomer) 72 g (30% monomer) 19 g (7.9% monomer) |

The resulting emulsion had a solid content of 30%, a polymerization degree (DAP) of 95.3%, a polymerization degree (EA) of 99.4%, an average particle size of 146 nm and a gel fraction of 96%.

Comparative Example 4

According to the same manner as in Example 2 except for using the same device as that of Example 2 and using an aqueous emulsifier solution and a monomer mixture, each having the following composition, the emulsion polymerization was conducted.

| Aqueous emulsifier solution | |
|---|---|
| Sodium dodecylbenzenesulfonate Water | 4.7 g 550 g |
| Monomer | |
| Methyl methacrylate (MMA) DAP AA | 171 g (72.5% monomer) 59 g (25% monomer) 6 g (2.5% monomer) |

The resulting emulsion had a solid content of 30%, a polymerization degree (DAP) of 94.3%, a polymerization degree (MMA) of 98.1 %, an average particle size of 96 nm and a gel fraction of 95%.

Example 9

The following materials were charged in a 1 L separable flask equipped with a stirrer, a thermometer, a condenser, a gas introducing inlet and a sampling inlet to prepare an aqueous emulsifier solution.
Separately, an emulsified monomer having the following composition was prepared.

| Sodium dodecylbenzenesulfonate | 5.0 g |
|---|---|
| Water | 180 g |
| DAP | 90 g (25% monomer) |
| EA | 261 g (72.5% monomer) |
| AA | 9 g (2.5% monomer) |

The internal temperature of the separable flask was heated to 70°C and the atmosphere in the flask was sufficiently displaced with nitrogen under stirring at 300 rpm using a semicircular stirring blade. Then, 10% of the prepared emulsified monomer was charged and an aqueous solution prepared by dissolving ammonium persulfate (1.26 g) in water (10 g) was added. The reaction was conducted for 1 hour, and then the residual emulsified monomer was gradually added over 4 hours and 30 minutes. Furthermore, the polymerization was conducted at 70°C for 9 hours after the addition of a catalyst. The resulting emulsion had a solid content of 45%, a polymerization degree (DAP) of 94.3%, a polymerization degree (EA) of 100%, an average particle size of 112 nm and a gel fraction of 97%.

Example 10

According to the same manner as in Example 9 except for using the same device as that of Example 9 and using an aqueous emulsifier solution and a monomer mixture, each having the following composition, the emulsion polymerization was conducted.

| Aqueous emulsifier solution | |
| --- | --- |
| Higher alcohol sulfate ester sodium salt (manufactured by Dai-ichi Kogyo Seiyaku Co., Ltd., trade name: Monogen Y-500) | 1.4 g |
| Water | 250 g |
| Emulsified monomer | |
| Higher alcohol sulfate ester sodium salt | 3.3 g |
| Water | 180 g |
| DAP | 90 g (25% monomer) |
| EA | 261 g (72.5% monomer) |
| AA | 9 g (2.5% monomer) |

The resulting emulsion had a solid content of 45%, a polymerization degree (DAP) of 96.6%, a polymerization degree (EA) of 100%, an average particle size of 121 nm and a gel fraction of 95%.

Example 11

According to the same manner as in Example 9 except for using the same device as that of Example 9 and using an aqueous emulsifier solution and a monomer mixture, each having the following composition, and ammonium persulfate (0.54 g), the emulsion polymerization was conducted.

| Aqueous emulsifier solution | |
| --- | --- |
| Polyoxyethylene alkyl ether sulfate ester ammonium salt (manufactured by Dai-ichi Kogyo Seiyaku Co., Ltd., trade name: Hi-tenol NE-05) | 2.2 g |
| Water | 250 g |
| Emulsified monomer | |
| Polyoxyethylene alkyl ether sulfate ester ammonium salt | 5.0 g |
| Water | 180 g |
| DAP | 90 g (25% monomer) |
| EA | 261 g (72.5% monomer) |
| AA | 9 g (2.5% monomer) |

The resulting emulsion had a solid content of 45%, a polymerization degree (DAP) of 90.2%, a polymerization degree (EA) of 100%, an average particle size of 145 nm and a gel fraction of 94%.

Example 12

According to the same manner as in Example 9 except for using the same device as that of Example 9 and using an aqueous emulsifier solution and a monomer mixture, each having the following composition, and ammonium persulfate (0.54 g), the emulsion polymerization was conducted.

| Aqueous emulsifier solution | |
| --- | --- |
| Polyoxyethylene alkyl ether phosphate ester ammonium salt (manufactured by Dai-ichi Kogyo Seiyaku Co., Ltd., trade name: Plysurf M-208B) | 2.2 g |
| Water | 250 g |
| Emulsified monomer | |
| Polyoxyethylene alkyl ether phosphate ester ammonium salt | 5.0 g |
| Water | 180 g |
| DAP | 90 g (25% monomer) |

(continued)

| Emulsified monomer | |
|---|---|
| EA | 261 g (72.5% monomer) |
| AA | 9 g (2.5% monomer) |

The resulting emulsion had a solid content of 45%, a polymerization degree (DAP) of 91.1%, a polymerization degree (EA) of 100%, an average particle size of 130 nm and a gel fraction of 97%.

Example 13

According to the same manner as in Example 9 except for using the same device as that of Example 9 and using an aqueous emulsifier solution and a monomer mixture, each having the following composition, and ammonium persulfate (0.54 g), the emulsion polymerization was conducted.

| Aqueous emulsifier solution | |
|---|---|
| Dialkylsulfosuccinic acid ester sodium salt (manufactured by Sanyo Chemical Industries, Ltd, trade name: Sanmolin OT-70) | 2.2 g |
| Water | 250 g |
| Emulsified monomer | |
| Dialkylsulfosuccinic acid ester sodium salt | 5.0 g |
| Water | 180 g |
| DAP | 90 g (25% monomer) |
| EA | 261 g (72.5% monomer) |
| AA | 9 g (2.5% monomer) |

The resulting emulsion had a solid content of 45%, a polymerization degree (DAP) of 93.5%, a polymerization degree (EA) of 100%, an average particle size of 120 nm and a gel fraction of 96%.

Example 14

According to the same manner as in Example 9 except for using the same device as that of Example 9 and using an aqueous emulsifier solution and a monomer mixture, each having the following composition, and ammonium persulfate (0.72 g), the emulsion polymerization was conducted.

| Aqueous emulsifier solution | |
|---|---|
| Sodium dodecylbenzenesulfonate | 3.2 g |
| Water | 250 g |
| Emulsified monomer | |
| Sodium dodecylbenzenesulfonate | 7.6 g |
| Water | 180 g |
| DATP | 90 g (25% monomer) |
| EA | 261 g (72.5% monomer) |
| AA | 9 g (2.5% monomer) |

The resulting emulsion had a solid content of 45%, a polymerization degree (DATP) of 95.1%, a polymerization degree (EA) of 100%, an average particle size of 88 nm and a gel fraction of 97%.

The results with respect to emulsions obtained in Examples 1 to 8 and Comparative Examples 1 to 4 are shown in Table 1, and those with respect to emulsions obtained in Examples 9 to 14 are shown in Table 2. In Table 1 and Table 2, EA represents ethyl acrylate, BA represents butyl acrylate, 2-EtHA represents 2-ethylhexyl acrylate, MMA represents methyl methacrylate, DAP represents diallyl orthophthalate, DATP represents diallyl terephthalate and AA represents acrylic acid, respectively.

## Table 1

| Monomer (parts by weight) | Example No. | | | | | | | | Comparative Example No. | | | |
|---|---|---|---|---|---|---|---|---|---|---|---|---|
| | 1 | 2 | 3 | 4 | 5 | 6 | 7 | 8 | 1 | 2 | 3 | 4 |
| EA | 72.5 | 66 | 74 | 87.5 | 62.5 | | | 72.5 | 92.5 | 47.5 | 62.1 | |
| BA | | | | | | 72.5 | | | | | | |
| 2-EtHA | | | | | | | 72.5 | | | | | |
| MMA | | | | | | | | | | | | 72.5 |
| DAP | 25 | 30 | 25 | 10 | 35 | 25 | 25 | | 5 | 50 | 30 | 25 |
| DATP | | | | | | | | 25 | | | | |
| AA | 2.5 | 4 | 1 | 2.5 | 2.5 | 2.5 | 2.5 | 2.5 | 2.5 | 2.5 | 7.9 | 2.5 |
| Emulsion concentration (% by weight) | 30 | 30 | 40 | 30 | 30 | 30 | 30 | 30 | 30 | 30 | 30 | 30 |
| Polymerization degree (% by weight) | 95.0 | 95.8 | 92.0 | 91.2 | 94.1 | 94.1 | 92.5 | 93.6 | 98.5 | 91.0 | 95.3 | 94.3 |
| Particle size (nm) | 139 | 97 | 139 | 95 | 119 | 96 | 75 | 80 | 84 | 183 | 146 | 96 |
| Gel fraction (% by weight) | 98 | 97 | 96 | 92 | 95 | 94 | 97 | 93 | 76 | 95 | 96 | 95 |

Table 2

| | Example No. | | | | | |
|---|---|---|---|---|---|---|
| | 9 | 10 | 11 | 12 | 13 | 14 |
| Monomer (parts by weight) | | | | | | |
|   EA | 72.5 | 72.5 | 72.5 | 72.5 | 72.5 | 72.5 |
|   DAP | 25 | 25 | 25 | 25 | 25 | |
|   DATP | | | | | | 25 |
|   AA | 2.5 | 2.5 | 2.5 | 2.5 | 2.5 | 2.5 |
| Emulsifier species | Anionic emulsifier<br><br>(2) | Anionic emulsifier<br><br>(3) | Nonionic-anionic composite emulsifier<br>(4) | Nonionic-anionic composite emulsifier<br>(5) | Anionic emulsifier<br><br>(6) | Anionic emulsifier<br><br>(7) |
| Amount of emulsifier (1) (% by weight) | 2.0 | 1.3 | 2.0 | 2.0 | 2.0 | 3.0 |
| Emulsion concentration (% by weight) | 45 | 45 | 45 | 45 | 45 | 45 |
| Polymerization degree (% by weight) | 94.3 | 96.6 | 90.2 | 91.1 | 93.5 | 95.1 |
| Particle size (nm) | 112 | 121 | 145 | 130 | 120 | 88 |
| Gel fraction (% by weight) | 97 | 95 | 94 | 97 | 96 | 97 |

(1)  Amount based on the whole monomer
(2)  Alkyl aryl sulfonate salt
(3)  Sulfate ester salt of higher alcohol
(4)  Polyoxyethylene alkyl ether sulfate ester salt
(5)  Polyoxyethylene alkyl ether phosphate ester salt
(6)  Sulfonate salt of dibasic fatty acid ester
(7)  Alkyl aryl sulfonate salt

EP 0 839 843 B1

Examples 15 to 22 and Comparative Examples 5 to 8

Using the emulsions obtained in Examples 1 to 8 and Comparative Examples 1 to 4, a crosslinking agent was mixed in an amount shown in Table 3 to prepare an emulsion composition, respectively. The composition was applied on the surface of a printed tissue paper having a basis weight of 30 g/m$^2$ using a bar coater (No. 28 defined in JIS K 5400), followed by a heat treatment at 80°C for 10 minutes and further at 150°C for 15 minutes to obtain a heat-treated coating tissue paper having a film thickness of about 10 μm.

The crosslinking agent used was a melamine resin (a completely alkylated methylmelamine resin, trade name "Saimel 303" manufactured by Mitsui Cyanamid Co., Ltd.) and an epoxy resin (a water-soluble epoxy ester resin, trade name "Denacol EX-614B" manufactured by Nagase Kasei Kogyo Co., Ltd.)

Examples 23 to 29

Using the emulsions obtained in Examples 9 to 14, a crosslinking agent was formulated in the emulsion in the amount shown in Table 4 to prepare an emulsion composition, respectively. The composition was applied on a zinc phosphate-treated steel plate (70 × 150 × 0.3 mm), on which an epoxy primer was applied in a thickness of 2 to 5 μ, using a bar coater so that the film thickness was about 15 μ. After drying at 80°C for 10 minutes, the baking was conducted under the conditions of the curing temperature and curing time shown in Table 4 to obtain a coated steel plate.

The crosslinking agent used was a melamine resin (a completely alkylated methylated melamine resin, trade name "Saimel 303" manufactured by Mitsui Cytec Co., Ltd.)

With respect to the above resulting heat-treated coated tissue paper, the film forming property, water resistance and solvent resistance (A) were evaluated. With respect to the coated steel plate, the film forming property, pencil hardness, flexing resistance, stain resistance and solvent resistance (B) were evaluated. The results are shown in Table 3 and Table 4, respectively.

With respect to the film forming property, the following three-level evaluation about four items of the tissue paper itself was conducted. With respect to the coated steel plate, the three-level evaluation about two items (crack, tackiness) was conducted according to the following criteria.

Crack

○:　　Any crack is not recognized.
Δ:　　A slight crack is recognized.
✕:　　A considerable crack is recognized.

Transparency

○:　　Glossy, haze of the substrate is not recognized.
Δ:　　Glossy, but slight haze of the substrate is recognized.
✕:　　Not glossy, haze of the substrate is recognized.

Tackiness

○:　　Any tackiness is not recognized even in case of pressing strongly with a finger.
Δ:　　Tackiness is recognized in case of pressing strongly with a finger.
✕:　　Tackiness is recognized even in case of pressing softly with a finger.

Susceptibility to discoloration

○:　　Any discoloration is not recognized.
Δ:　　Slight yellowing is recognized.

✕:     Severe yellowing is recognized.

The water resistance test and solvent resistance test (A) were respectively conducted by putting water droplets or an absorbent wadding impregnated with each solvent on the tissue paper, standing at room temperature for 15 minutes, wiping off the water droplets or solvent with a dried absorbent wadding, observing the surface state of that portion, followed by five-level evaluation according to the following criteria. Incidentally, the above solvent test was conducted with supplying the solvent in the absorbent wadding for compensating the evaporated solvent.

5: No abnormality is recognized.
4: A slight change in gloss is recognized, and a very slight discoloration is recognized.
3: A change in gloss is apparently recognized, and a slight discoloration is recognized.
2: A slight crack arises, in addition to the change of the level 3.
1: A large crack arises or the substrate is exposed, and blur of printing ink is considerable.

The pencil hardness was judged according to JIS K 5400.
The flex resistance was judged by folding a coated steel plate at an angle of 180 degrees using a vise, and observing a crack arises at the folded portion by a test glass (magnification: x 10). "nT" means that no crack arises in case of folding after interposing n plates having the same thickness into the folding portion. The smaller the numeral becomes, the better the processability.
The stain resistance was judged by coloring the coated surface of the coated steel plate by a black felt-tip pen, wiping off the ink with a gauze impregnated with ethanol after 24 hours, and then observing the degree of coloring. The results are evaluated as follows.

○:     Good (no ink trace)
Δ:     Slightly good
✕:     Poor (ink trace apparently remains)

The solvent resistance (B) was judged by rubbing the coated film of the coated steel plate by a gauze impregnated with toluene under a load of 3 kg and determining the number of rubbing times until the substrate is exposed.

## Table 3

| | Example No. | | | | | | | | Comparative Example No. | | | |
|---|---|---|---|---|---|---|---|---|---|---|---|---|
| | 15 | 16 | 17 | 18 | 19 | 20 | 21 | 22 | 5 | 6 | 7 | 8 |
| **Formulation (parts by weight)** | | | | | | | | | | | | |
| Used emulsion | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
| Amount of emulsion | 100 | 100 | 100 | 100 | 100 | 100 | 100 | 100 | 100 | 100 | 100 | 100 |
| Melamine resin | 10 | | | 10 | 10 | 10 | 10 | 10 | 10 | 10 | 10 | 10 |
| Epoxy resin | | 10 | 10 | | | | | | | | | |
| **Film forming property** | | | | | | | | | | | | |
| Crack | ○ | ○ | ○ | ○ | ○ | ○ | ○ | ○ | ○ | × | △ | × |
| Transparency | ○ | ○ | ○ | ○ | ○ | ○ | ○ | ○ | ○ | − | ○ | − |
| Tackiness | ○ | ○ | ○ | ○ | ○ | ○ | ○ | ○ | △ | − | ○ | − |
| Resin discoloration susceptibility | ○ | ○ | ○ | ○ | ○ | ○ | ○ | ○ | △ | − | ○ | − |
| Water resistance | 5 | 4 | 5 | 5 | 5 | 5 | 5 | 5 | 4 | − | 2 | − |
| **Solvent resistance (A)** | | | | | | | | | | | | |
| Toluene | 5 | 5 | 4 | 4 | 5 | 5 | 4 | 5 | 2 | − | 4 | − |
| Acetone | 5 | 5 | 4 | 5 | 5 | 5 | 5 | 5 | 2 | − | 4 | − |
| Ethanol | 5 | 5 | 5 | 4 | 5 | 5 | 5 | 5 | 3 | − | 4 | − |

EP 0 839 843 B1

## Table 4

| | 23 | 24 | 25 | 26 | 27 | 28 | 29 |
|---|---|---|---|---|---|---|---|
| **Formulation (parts by weight)** | | | | | | | |
| Used emulsion | Example 9 | Example 9 | Example 10 | Example 11 | Example 12 | Example 13 | Example 14 |
| Amount of emulsion | 100 | 100 | 100 | 100 | 100 | 100 | 100 |
| Melamine resin | 10 | 20 | 10 | 10 | 10 | 10 | 10 |
| Curing temperature (°C) | 190 | 150 | 190 | 190 | 190 | 190 | 190 |
| Curing time (min) | 15 | 30 | 15 | 15 | 15 | 15 | 15 |
| Film forming property Crack | ○ | ○ | ○ | ○ | ○ | ○ | ○ |
| Tackiness | ○ | ○ | ○ | ○ | ○ | ○ | ○ |
| Pencil hardness | 3H | 3H | 3H | 3H | 3H | 3H | 5H |
| Flex resistance | 4T | 5T | 4T | 4T | 4T | 4T | 3T |
| Stain resistance Red felt-tip pen | ○ | ○ | ○ | ○ | ○ | ○ | ○ |
| Black felt-tip pen | ○ | ○ | ○ | ○ | ○ | ○ | ○ |
| Solvent resistance (B) Toluene | 360 | 500< | 350 | 370 | 330 | 370 | 300 |
| MEK | 180 | 400 | 180 | 170 | 150 | 180 | 80 |

Note: The thickness of the coated film of Example 26 is about 6 $\mu$.

As is apparent from Table 3, the emulsion composition prepared by formulating the crosslinking agent in the emulsion of the present invention is superior in film forming property, water resistance and solvent resistance. To the contrary, the emulsion composition of Comparative Example 5 using the emulsion of Comparative Example 1 wherein the amount of the diallyl phthalate monomer is 5% by weight smaller than that of the present invention is inferior in tackiness, and is apparently inferior in water resistance and solvent resistance to the present invention. Since the emulsion composition of Comparative Example 6 using the emulsion of Comparative Example 2 wherein the amount of the diallyl phthalate monomer is 50% by weight larger than that of the present invention causes a crack considerably, and is inferior in film forming property. Therefore, the evaluation of the water resistance and solvent resistance was not conducted.

The emulsion composition of Comparative Example 7 using the emulsion of Comparative Example 3 wherein the amount of the $\alpha$, $\beta$-unsaturated carboxylic acid is 7.9% by weight larger than that of the present invention is drastically inferior in water resistance. The emulsion composition of Comparative Example 8 using the emulsion of Comparative Example 4 using methacrylate in place of acrylate causes a crack considerably, and does not show any film forming property.

A laminated plate prepared by press-bonding the heat-treated coated tissue paper of Example 15 with a particle bond using a vinyl acetate adhesive was tested according to JAS. As a result, 13.7 kg was obtained in the planar tensile test and no change was recognized in the water resistance test B. In the wear test B, the number of wear value was 93 and wear amount was 0.03 g. Furthermore, 15.5 $\mu$m was obtained in the scratch test B and no change was recognized in the stain B test.

As is apparent from Table 4, the emulsion composition prepared by formulating the crosslinking agent in the emulsion of the present invention is superior in each of film forming property, pencil hardness, flexing resistance, stain resistance and solvent resistance (B).

Example 30

The emulsion (10 g) obtained in Example 1 was freeze-dried for 60 hours to obtain 3 g of a white powder. The average particle size of this powder was 30 μm.

The crosslinked allyl copolymer fine particle-containing aqueous emulsion of the present invention can be used in a paint, a coating material, an adhesive, a printing ink,a paper processing and a fiber processing and is useful as a functional material because of its excellent film forming property in spite of the polymerization degree of diallyl phthalate of at least 90%.

**Claims**

1. A crosslinked allyl copolymer fine particle-containing aqueous emulsion having an average particle size of at most 200 nm, which is obtained by emulsion-copolymerizing a monomer comprising (a) 10 to 40% by weight of diallyl phthalate, (b) 0.1 to 5% by weight of an α,β-unsaturated carboxylic acid and (c) a balance of an acrylate ester wherein the number of carbon atoms of an alcohol is from 1 to 8 until the polymerization degree of diallyl phthalate (a) becomes at least 85%.

2. The crosslinked allyl copolymer fine particle-containing aqueous emulsion according to claim 1, wherein diallyl phthalate (a) is a monomer selected from diallyl orthophthalate, diallyl isophthalate and diallyl terephthalate.

3. The crosslinked allyl copolymer fine particle-containing aqueous emulsion according to claim 1 or claim 2, wherein the α, β-unsaturated carboxylic acid (b) is a monomer selected from acrylic acid, methacrylic acid, crotonic acid, maleic acid and itaconic acid.

4. The crosslinked allyl copolymer fine particle-containing aqueous emulsion according to any one of claim 1 to 3, wherein the acrylate ester (c) is a monomer selected from methyl acrylate, ethyl acrylate, propyl acrylate, isopropyl acrylate, butyl acrylate, isobutyl acrylate, 2-ethylhexyl acrylate and octyl acrylate.

5. An emulsion composition which is obtained by adding a crosslinking agent capable of reacting with a carboxyl group to the emulsion of any one of claim 1 to 4.

6. The emulsion composition according to claim 5, wherein the crosslinking agent is an amino resin or an epoxy compound.

7. A crosslinked allyl copolymer particle which is obtained by drying the emulsion of any one of claims 1 to 4.

8. A film formed on a substrate, which is obtained by coating the emulsion of any one of claim 1 to 4 on the substrate and drying the coated emulsion.

9. A method for forming a crosslinked film, which comprises coating the emulsion composition of claim 5 or 6 on a substrate, and drying and crosslinking the coated emulsion composition.

**Patentansprüche**

1. Wässrige Emulsion, enthaltend feine Teilchen von vernetztem Allyl-Copolymer mit einer mittleren Teilchengröße von höchstens 200 nm, die durch Emulsions-copolymerisation eines Monomers, das (a) 10 bis 40 Gew.-% Phthalsäurediallylester, (b) 0,1 bis 5 Gew.-% einer α,β-ungesättigten Carbonsäure und (c) einer Restmenge eines Acrylatesters, in dem die Zahl der Kohlenstoffatome eines Alkohols 1 bis 8 beträgt, umfasst, bis der Polymerisationsgrad des Phthalsäurediallylesters (a) mindestens 85 % beträgt, erhalten wird.

2. Wässrige Emulsion, enthaltend feine Teilchen von vernetztem Allyl-Copolymer nach Anspruch 1, wobei der Phthalsäurediallylester (a) ein aus Orthophthalsäurediallylester, Isophthalsäurediallylester und Terephthalsäurediallylester ausgewähltes Monomer ist.

3. Wässrige Emulsion, enthaltend feine Teilchen von vernetztem Allyl-Copolymer, nach Anspruch 1 oder Anspruch 2, wobei die α,β-ungesättigte Carbonsäure (b) ein aus Acrylsäure, Methacrylsäure, Crotonsäure, Maleinsäure und Itaconsäure ausgewähltes Monomer ist.

4. Wässrige Emulsion, enthaltend feine Teilchen von vernetztem Allyl-Copolymer, nach einem der Ansprüche 1 bis 3, wobei der Acrylatester (c) ein aus Acrylsäuremethylester, Acrylsäureethylester, Acrylsäurepropylester, Acrylsäureisopropylester, Acrylsäurebutylester, Acrylsäureisobutylester, Acrylsäure-2-ethylhexylester und Acrylsäureoctylester ausgewähltes Monomer ist.

5. Emulsionszusammensetzung, die durch Zugabe eines zur Reaktion mit einer Carboxylgruppe fähigen Vernetzungsmittels zur Emulsion nach einem der Ansprüche 1 bis 4 erhalten wird.

6. Emulsionszusammensetzung nach Anspruch 5, in der das Vernetzungsmittel ein Aminoharz oder eine Epoxyverbindung ist.

7. Vernetztes Allyl-Copolymerteilchen, das durch Trocknen der Emulsion nach einem der Ansprüche 1 bis 4 erhalten wird.

8. Auf einem Substrat gebildeter Film, der durch Auftragen der Emulsion nach einem der Ansprüche 1 bis 4 auf das Substrat und Trocknen der aufgetragenen Emulsion erhalten wird.

9. Verfahren zum Bilden eines vernetzten Films, umfassend Auftragen der Emulsionszusammensetzung nach Anspruch 5 oder 6 auf ein Substrat und Trocknen und Vernetzen der aufgetragenen Emulsionszusammensetzung.


**Revendications**

1. Emulsion aqueuse contenant des particules fines de copolymère allylique réticulé ayant une dimension moyenne de particules d'au plus 200 nm, obtenue en copolymérisant en émulsion un monomère comprenant (a) 10 à 40 % en masse de phtalate de diallyle, (b) 0,1 à 5 % en masse d'un acide carboxylique α,β-insaturé et (c) le complément en un ester acrylique dans lequel le nombre d'atomes de carbone de l'alcool est de 1 à 8 jusqu'à ce que le degré de polymérisation du phtalate de diallyle (a) atteigne au moins 85 %.

2. Emulsion aqueuse contenant des particules fines de copolymère allylique réticulé selon la revendication 1, dans laquelle le phtalate de diallyle (a) est un monomère choisi parmi l'orthophtalate de diallyle, l'isophtalate de diallyle et le téréphtalate de diallyle.

3. Emulsion aqueuse contenant des particules fines de copolymère allylique réticulé selon la revendication 1 ou la revendication 2, dans laquelle l'acide carboxylique α,β-insaturé (b) est un monomère choisi parmi l'acide acrylique, l'acide méthacrylique, l'acide crotonique, l'acide maléique et l'acide itaconique.

4. Emulsion aqueuse contenant des particules fines de copolymère allylique réticulé selon une quelconque des revendications 1 à 3, dans laquelle l'ester acrylique (c) est un monomère choisi parmi l'acrylate de méthyle, l'acrylate d'éthyle, l'acrylate de propyle, l'acrylate d'isopropyle, l'acrylate de butyle, l'acrylate d'isobutyle, l'acrylate de 2-éthylhexyle et l'acrylate d'octyle.

5. Composition d'émulsion, obtenue par addition d'un agent réticulant capable de réagir avec un groupe carboxylique à l'émulsion selon l'une quelconque des revendications 1 à 4.

6. Composition d'émulsion selon la revendication 5, dans laquelle l'agent réticulant est une résine amino ou un composé époxy.

7. Particule de copolymère allylique réticulé obtenue en séchant l'émulsion selon l'une quelconque des revendications 1 à 4.

8. Film formé sur un substrat, obtenu par dépôt de l'émulsion selon l'une quelconque des revendications 1 à 4 sur le substrat et par séchage de l'émulsion déposée.

9. Méthode de formation d'un film réticulé, comprenant le dépôt de la composition d'émulsion de la revendication 5 ou 6 sur un substrat et le séchage et la réticulation de la composition d'émulsion déposée.